# EUROPEAN PATENT APPLICATION

(11) **EP 1 921 825 A1**
(43) Date of publication of application: **14.05.2008**
(21) Application number: 07020618.0
(22) Date of filing: 22.10.2007
(51) Int. Cl.: H04L 29/08

(54) **Group management**

(30) Priority: 20.10.2006 GB 0620928
(71) Applicant: Vodafone Group PLC, Newbury Berkshire RG14 2FN (GB)
(72) Inventor: Ballette, Marco, Guildford Surrey GU2 7NW (GB); Gasparroni, Max, Swindon Wiltshire SN25 4GS (GB); Brick, Patrick, Hammersmith London W6 0EZ (GB)
(74) Representative: Keston, David Arthur

(57) **Abstract**

In order to manage a group of telecommunications devices (40), group information is distributed between the telecommunication devices using a SIP event notification framework, and particularly by a SIP PUBLISH method. The SIP PUBLISH method creates or modifies the group information. The group of devices form a peer-to-peer network. The devices may be mobile or cellular telecommunications devices. In a further aspect, content is shared between a first device (10) and a second device (20). A group of devices, including the first device (10) is established. The group is arranged such that the first device (10) is notified by a SIP NOTIFY message when the second device (20) wishes to join the group. In response to the SIP NOTIFY message, the first device (10) selectively provides the second device (10) with data enabling the content to be accessed by the second device (10). The first device (10) subscribes to the group as a "watcher" of the group members in order to receive the SIP NOTIFY message, whenever devices intend to join its group.

## Description

The invention relates to a method of managing a group of telecommunications devices, and to a method of sharing content or group information between telecommunication devices.

Open Mobile Alliance (OMA) (http://www.operanobilealhance.org/) has produced a number of specification documents covering group management. The enabler (OMA terminology for specification package) is called XDM (XML Document Management) and it defines a generic XML manipulation management specification based on XCAP and Session Initiation Protocol (SIP) subscribe/notify.

OMA can be regarded as the centre of mobile service enabler specification work, helping the creation of interoperable services across countries, operators and mobile terminals that will meet the needs of the user. Its mission is to facilitate global user adoption of mobile data services by specifying market driven mobile service enablers that ensure service interoperability across devices, service providers, operators, and networks.

OMA solutions to SIP based group management rely on the use of the XML Configuration Access Protocol (XCAP) (ref. [14]), by which *principals* (group members with special privileges such as the ability to add/delete group members, set the group accessibility, etc.) can manipulate group related information, stored in centralized servers as XML documents. "XCAP resources" correspond to elements and attributes of an XML document. An XCAP resource is identified via an HTTP URI following the conventions for constructing URIs in ref. [14]. This set of group members act as "XDM Clients" and manipulates XDMS XML documents by invoking certain HTTP operations on the XDM resource identified in the Request-URI of the HTTP header.

Groups members in OMA subscribe to group state information properties (e.g. addition of new members, changes in group properties, etc.) by subscribing to changes in the XML documents describing the group, using the SIP subscription/notification mechanism according to: RFC 3265 "SIP-Specific Event Notification", ref. [2]; "An Extensible Markup Language (XML) Document Format for Indicating Changes in XML Configuration Access Protocol (XCAP) Resources", J. Rosenberg, ref. [12]; and http://www.ietf.org/internet-drafts/draft-garcia-sipping-resource-sharing-framework-00.txt ref. [15].

OMA standardization provides a "server-centric" model. In contrast, the first embodiment of the present invention to be described provides an arrangement by which group management can be decentralized by distributing group information among the group members in a peer-to-peer fashion, in order to eliminate the reliance on a centralized entity.

Questions can be raised about the suitability of XCAP to retrieve group information from mobile terminals acting as group information repositories for other group members.

Group management is an important functionality in Peer-to-Peer (P2P) systems, VoIP and Instant Messaging clients, etc. It allows the creation of groups of users with well defined properties, such as their accessibility, visibility, their members' privileges, etc.

Mobile Peer-to-Peer (MP2P) communities (e.g. House Selling application) and MP2P Blogs rely on the creation of groups with substantially different policies.

MP2P communities are open groups where every user can join a MP2P service community (Dating, House Selling, etc.) and add/delete other users interested in joining it.

On the other hand, MP2P Blogs are more concerned with limiting the group access to a restricted number of members (e.g. people with whom users want to share their pictures).

However, some common desirable features can be identified for these two types of applications; these are:
- Groups must be managed in an end-user friendly way, with users being able to easily add, remove contacts, set up the group properties, block some users or unsolicited spam, etc.
- Group members should be able to be notified every time an event they are interested in (e.g. new group member have been added, group policies have been changed, new content is available in the group, etc.) occurs.
- Some group members should be able to set group membership (group access), defining who is able to access the group, and being able to prevent unauthorised end-users to access or modify group information.
- Ability, for some group members, to propagate all or a subset of group privileges to other members.

The third generation partnership project (3GPP) has recently defined a new concept known as IMS (IP-based Multimedia Subsystem). The IMS is a set of core network servers sitting behind the GGSN in the packet switched domain. These servers are introduced in order to process signalling between end users. The aim of IMS is to allow bodies such as mobile telephone network operators to provide services to their users as efficiently and effectively as possible. For example, the IMS architecture is likely to support the following communication types, voice, video, instant messaging (IM), "presence" (a user's availability for contact), location-based services, email and the web. Further communication types are likely to be added in the future.

With IMS, users are no longer restricted to a separate voice call or data session. Sessions can be established between mobile devices that allow a variety of communication types to be used and media to be exchanged. The sessions are dynamic in nature in that they can be adapted to meet the needs of the end users. For example, two users might start a session with an exchange of instant messages and then decide that they wish to change to a voice call, possibly with video. This is all possible within the IMS framework. If a user wishes to send a file to another user and the users already have a session established between each other (for example, a voice session) the session can be redefined to allow a data file exchange to take place. This session redefinition is transparent to the end user.

The diverse collection of communications services requires efficient session management due to the number of different applications and services that will be developed to support these communication types: The 3GPP have chosen SIP for managing these sessions.

SIP was developed by Internet Engineering Task Force (IETF), whose working documents are Internet Drafts and Request For Comments that are made publicly available. A list of current RFC on SIP is available at: http://www1 .cs.columbia.edu/sip/drafts.html.

The SIP protocol is a session-based protocol designed to establish IP based communication sessions between two or more end points or users. Once a SIP session has been established, communication between these end points or users can be carried out using a variety of different protocols (for example those designed for streaming audio and video). These protocols are defined in the SIP session initiation messages.

SIP is the IETF-defined control protocol for VOIP and other text and multimedia sessions, like instant messaging, video, online games and other services. SIP provides a general purpose asynchronous event notification framework. This framework is not designed for specific applications or services, but it can be extended to provide different services such as automatic callback services (based on terminal state events), buddy lists (based on user presence events), message waiting indications (based on mailbox state change events), and service/content discovery (e.g. see WO2006060375: "SERVICE DISCOVERY USING SESSION INITIATION PROTOCOL (SIP)").

The event notification mechanisms defined in ref. [2] and RFC 3903 "Session Initiation Protocol (SIP) Extensions for Event State Publication, ref. [4], are not intended to be a general-purpose infrastructure for all classes of event subscription and notification. Meeting requirements for the general problem set of subscription and notification is far too complex for a single protocol. The goal is a SIP-specific framework for event notification which is not so complex as to be unusable for simple features (e.g. automatic call-back services: based on terminal state events, buddy lists: based on user presence events), but which is still flexible enough to be easily extended to provide more powerful services (e.g. service/content discovery as shown in http://www.research.earthlink.net/p2p/ ref. [8] and in "Namespaces in XML", Bray, T et al., ref. [9]).

Extensions to the SIP-events framework ref. [2] and publication mechanism introduced in ref. [4] have been proposed to allow SIP P2P. User Agents (applications running on a terminal) use the SIP event framework to publish, subscribe, and get notifications of the availability of generic resources, where a resource can be, for example, a file (e.g. images, video files, audio files), streaming content, a printer, a printer job, etc..

A user agent client (UAC) is a logical entity that creates a new request, and then uses the client transaction state machinery to send it. The role of UAC lasts only for the duration of that transaction. In other words, if a piece of software initiates a request, it acts as a UAC for the duration of that transaction. If it receives a request, it assumes the role of a user agent server for the processing of that transaction.

A user agent server (UAS) is a logical entity that generates a response to a SIP request. The response accepts, rejects, or redirects the request. This role lasts only for the duration of that transaction. In other words, if a piece of software responds to a request, it acts as a UAS for the duration of that transaction. If it generates a request later, it assumes the role of a user agent client for the processing of that transaction.

Service discovery is another application use case, where the SIP PUBLISH method can be used to advertise service descriptions (see for example WO2006060375). Network nodes can propagate service advertisements using the SIP publish method, and/or can inform subscribing devices of services using the notify component of the SIP event package.

According to a first aspect of the present invention, there is provided a method of managing a group of telecommunication devices, including distributing group information between the telecommunication devices using a Session Initiation (SIP) event notification framework.

The information is distributed using a SIP PUBLISH method in the first embodiment to be described below. The SIP PUBLISH method creates or modifies the group information. The SIP PUBLISH method may be as defined in RFC 3903 - ref. [4].

In the first embodiment to be described, the group of devices form a Peer-to-Peer network. In the first embodiment the devices comprise mobile or cellular telecommunications devices and form a mobile Peer-to-Peer network. This is to be contrasted with the server-centric approach proposed by OMA. However, it should be appreciated that the embodiment is also applicable in a typical client-server paradigm.

Currently, 30 percent of internet users are Blog readers. Mobile P2P Blogs, allowing de-centralized sharing of user personal contents such as pictures or videos, using SIP based P2P group management are described in the embodiments, and provide a valid alternative to current server-centric solutions on P2P platforms, such as proposed by OMA.

The first embodiment provides a MP2P solution enabling the creation of open communities where users are grouped based for example on:
- The type of MP2P service provided (e.g. a "House Selling" service may gather users willing to buy/sell houses by providing means to share pictures/live-feeds of the properties to be sold).
- The type of contents that users are willing to share (e.g. grouping together house sellers/buyers based on the geographic area) location of the property.

Another example of MP2P application is *MP2P Blogs.* Blogs are running journals regularly updated and available on the web. Many users *daily* update their Blogs, feeding them with video and pictures taken with their mobiles e.g. at a party, at a World cup match, etc.

Conventionally, Blogs rely on a client-server paradigm and inherit some of the typical issues raised by a server centric approach, where all the users' contents are stored on a server.

Due to the increasing terminal storage capabilities, users could easily overload servers with their personal contents. Moreover, mobile contents are *extremely* volatile and most of the times users are not concerned with updating their Blogs or deleting their old contents.

Therefore, considering the nature of mobile contents, the present inventors propose a MP2P solution to Mobile Blogs, with integrated facilities for sharing contents and minimization of users interaction, as a preferable solution for Mobile Blogging.

Currently, there are no solutions leveraging the SIP event notification framework to access or modify group information. These functionalities may include (but are not limited to):
1. Ability to dynamically create groups based, for example, on the type of contents they are willing to share (P2P communities), or on a subset of contacts in the buddy list manually selected by a user.
2. Ability to modify group privileges (e.g. ability to add or delete new members) among group members, etc.
3. Ability to prevent unauthorised end-users to access or modify group information.

The first embodiment extends the existing SIP event notification framework to provide the aforementioned functionalities. In particular, the SIP PUBLISH method is used.

The SIP PUBLISH method is NOT currently used to convey or modify group information to group members or other entities interested in this information.

By using the SIP publish method to publish group information, group members' participating devices do not have to rely on any specific protocol to create or modify the group information stored on a network node. Group information is conveyed in the PUBLISH body, with the actual implementation of the group database out of the scope of this invention.

The first embodiment provides a SIP-enabled event notification framework providing group management functionality. In such a framework, one or more system components participate in a Session Initiation Protocol (SIP)-enabled group managed system. Participation includes using the SIP PUBLISH method to create/modify group information. Group information may include (but is not limited to):
- Group members;
- Group members privileges;
- Group managers;
- Group identifier;
- Maximum number of members allowed in the group;
- Group expiration time; and
- Group visibility and accessibility, which may include a list of users prevented from accessing the group or the users that are allowed to be part of the group.

The system component can be a SIP enabled device using PUBLISH components of a SIP event package to create or modify group information.

SIP enabled devices can propagate group information using the SIP publish method, and/or inform subscribing devices of changes in the group state (e.g. new devices have joined the group, existing devices have been deleted from a group) using any other means.

The first embodiment provides a concrete example of the SIP PUBLISH extensions introduced in ref. [4] to create or modify group state information mentioned above. Extensions are provided also to the SIP event framework in ref. [2] in order to provide subscribers with group state changes notifications. These extensions are not a part of the first embodiment.

According to a second aspect of the present invention, there is provided a method of sharing content or group information between a first device and a second device, the method including establishing a group of devices including the first device and arranged such that the first device is notified by a SIP NOTIFY when the second device wishes to join the group, and in response to which the first device selectively provides the second device with data enabling the content or group information to be accessed by the second device.

In the second embodiment to be described, the first device subscribes to the group as a group members' information "watcher" (i.e. party interested in receiving notifications of any changes in the group members' information).

In the second embodiment to be described, the second device generates a SIP SUBSCRIBE message when it wishes to join the group.

In the embodiment the data may be provided in the XML body of a SIP NOTIFY message.

In the second embodiment a group management entity is provided for receiving and/or transmitting said messages and for receiving and/or transmitting said data. The group management entity may be either a centralised server (in the case of a group management client-server, server-centric approach) or a group server (in the case of a Peer-to-Peer approach).

The second embodiment provides a method of notifying the group owner(s) of the willingness of other devices to join the group the group owner is responsible for in order to share content or group information.

For a better understanding of the present invention, embodiments of invention will now be described by way of example, with reference to the accompanying drawings, in which:
Figure 1A illustrates a group of telecommunications devices upon which the invention may be implemented;
Figure 1B shows the messages exchanged between group members and a group manager according to a first embodiment of the invention;
Figure 2 shows the messages exchanged according to a second embodiment of the invention; and
Figure 3 the messages exchanged when the first and second embodiments of the invention are combined.

It should be understood that the detailed description and specific examples, are only intended for purposes of illustration and are not intended to limit the scope of the invention.

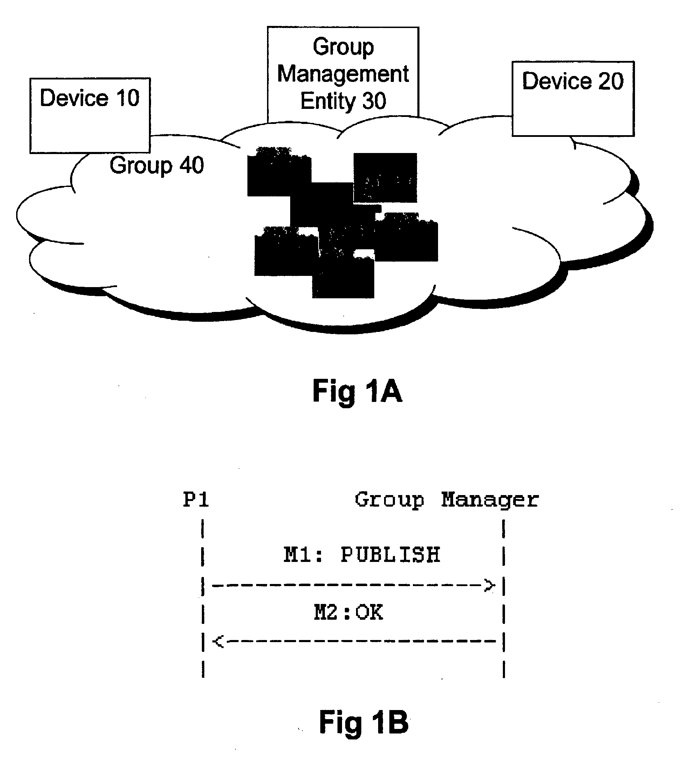

Figure 1A shows a group of telecommunications devices 40 upon which the invention may be implemented. The group includes device 10 and device 20. The group is managed by a group management entity 30.

The aim of the message exchange shown in Fig. 1B is to provide a concrete example of the SIP PUBLISH extensions (see ref. [4]) proposed in the first embodiment to create or modify group state information.

M1: P 1 (group owner or initiator) contacts the group manager to create a group ("D1Group@example.com") and to publish group information using SIP PUBLISH. The group information is provided in the XML body of the SIP PUBLISH request sent to the Group Manager. This information contains for each group member the owner SIP contact (initiator=devicel@example.com), group access policy (access="CLOSED", i.e. only the members listed in the XML body are able to access or modify group information) and group members' information including each member's unique member identifier (e.g. iuqw982e), the membership expiration (e.g. 36000 sec.), the displayed name (e.g. marco), the SIP URI (e.g. userl @pl.example.com), and group privileges (e.g. ADD_MEMBERS, DELETE_MEMBERS, CHANGE_GROUP_PROPERTIES).

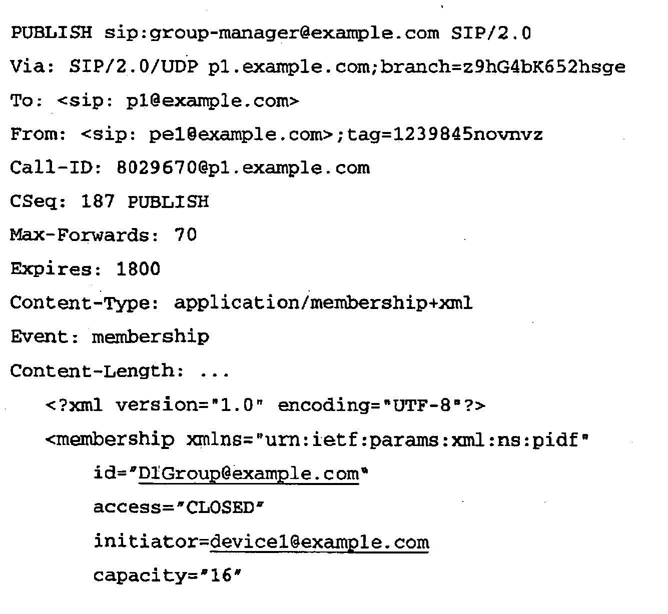

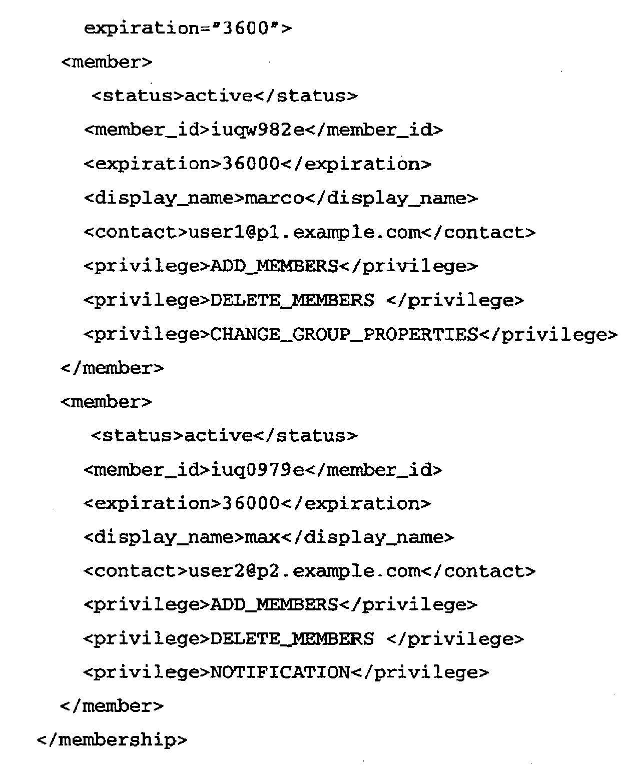

M2: The Group Manager, stores the group information provided in the SIP PUBLISH XML body and confirms the advert publication by sending a 200 OK message.

```
 SIP/2.0 200 OK
 via: SIP/2.0/UDP p1.example.com;branch=z9hG4bK652hsge
 To: <sip: device1@example.com>;tag=12398087nvz
 From: <sip: device2@example.com@example.com>;tag=1239895novnvz
 Call-ID: 8029670@p1.example.com
 CSeq: 187 PUBLISH
 Contact: sip:group-manager@example.com
 Expires: 1799
```

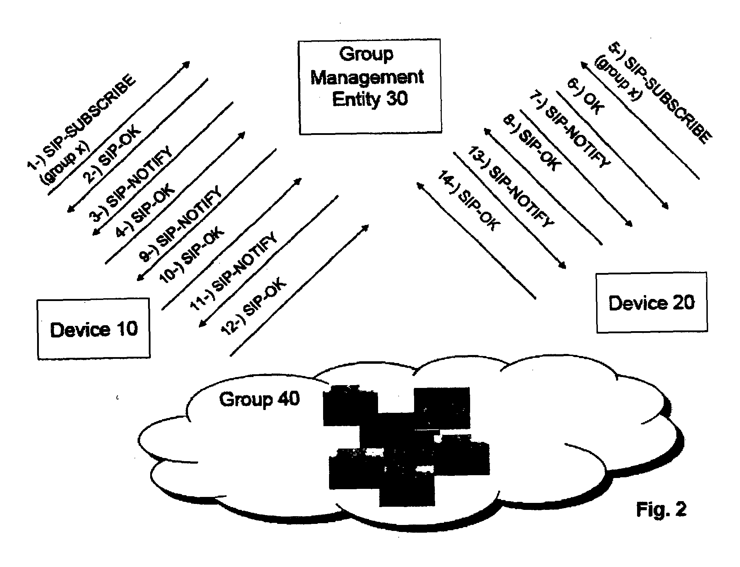

A second embodiment of the invention will now be described. In this embodiment, for illustration purposes the group owner is represented by a first device (device 10 in Fig. 2), whereas a user willing to join the group is represented by a second device (device 20 in Fig. 2). This second aspect of the invention does not restrict the number of owners a group may have. As an example, it is assumed that device 10 in Figure 2 has the group owner rights.

In the method, it is supposed that a group of devices is already created by some means outside the scope of the present embodiment. In the second embodiment of the present invention, a device with group management authorization (e.g. device 10 in Figure 2), subscribes himself as a "watcher" (i.e. party interested in receiving notifications of any changes in the group members' information) of its own group information. This information includes the subscription status of all the group members and it is contained in the SIP SUBSCRIBE request (message 1 in Fig. 2). The group manager authorizes the subscription, allowing device 10 to subscribe to his own group members information, and responds with a 200 OK (message 2 in Fig. 2). Following this authorization, as specified in ref. [2], device 10 is sent a SIP NOTIFY message with the current group members information (message 3 in Fig. 2), which acknowledges with a 200 SIP OK (message 4 in Fig. 2).

Each device (device 20 in Fig. 2), not originally included in the list of group members by the first device (device 10 in Fig. 2), may subscribe to group information by sending a SIP SUBSCRIBE to the group management entity (message 5 in Fig. 2). Message 6 in Fig. 2 is the SIP 200 OK response from the group manager to acknowledge the reception of the SIP SUBSCRIBE (message 5 in Fig. 2). The group management entity adds the second device to the list of group members with a pending (i.e. membership has not been approved by the group owner) subscription. Devices with a "pending" subscription are not able to access group information and have to wait the group owner authorization in order for their subscription status to become "active" in order to access group information. This information should be returned in the SIP NOTIFY sent by the group manager to device 20 (message 7 in Fig. 2), whose reception is acknowledged by sending the SIP 200 OK (message 8 in Fig. 2) to the group manager.

Due to the first device's initial subscription to its own group member's information (message I and 2 in Fig. 2), the first device receives a notification via a SIP NOTIFY (message 9 in Fig. 2) from the group management entity. The information, provided in the SIP NOTIFY (message 9 in Fig. 2) body, will inform the first device about the second device's pending subscription. Message 10 in Fig.2 (SIP OK) will be sent to the Group Management Entity as a way to acknowledge the reception of the SIP NOTIFY message (message 9 in Fig.2). The first device will consequently authorize or block the second device's access to its group information by some means. An example is provided in the first embodiment of this patent, by using the SIP PUBLISH method. However, authorization may be granted by the first device by any other means. As this mechanism is not part of this second embodiment of the present invention, it is NOT described in Fig. 2.

The first device (device 10 in Fig. 2) group information authorization or access denial will cause a change in the status of the second device subscription (which moves from PENDING to ACTIVE, if authorized, or BLOCKED otherwise). This information is propagated from the group management service to:
1. the first device (group owner) by sending a SIP NOTIFY request (message 11) in Fig. 2 with the XML body containing the current group subscriptions information. This message is acknowledged by message 12 (SIP OK) in Fig.2.
2. the requesting peer (device 20 in Fig. 2) by sending a SIP NOTIFY request (message 13) in Fig. 2 (acknowledged by message 14, in Fig. 2), with the XML body containing a subset of the group information (e.g. group name, members and owners, location of the content) sent to the first device. This is done only after the group owner has granted the membership request. Otherwise a suggested approach (which is not part of the embodiment) would be to perform a "polite" blocking, by not notifying the group membership requestor of any block performed by the group owner(s).

In the second embodiment a group management entity is provided for receiving and/or transmitting said messages and for receiving and/or transmitting said data. The group management entity may be either a centralised server (in the case of a group management client-server, server-centric approach) or a group server (in the case of a Peer-to-Peer approach).

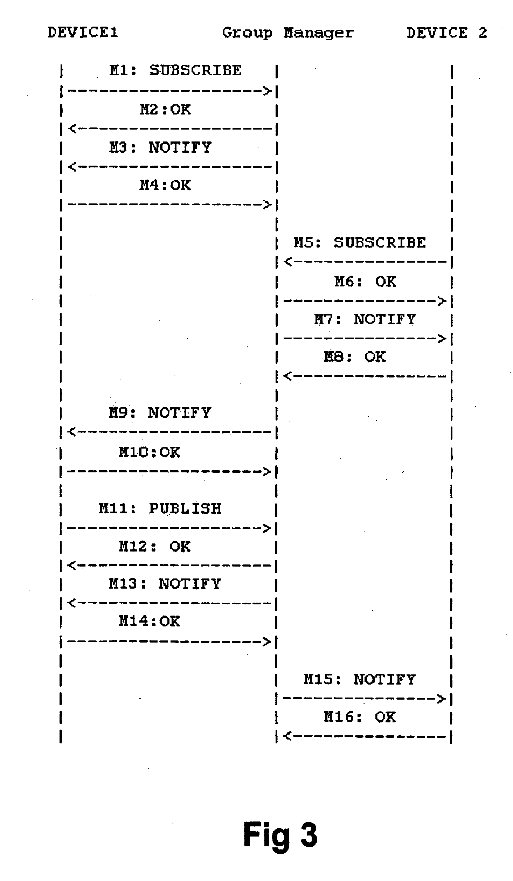

In Fig. 3 it is shown the signalling in a scenario where the previously introduced use cases (Use of SIP PUBLISH to publish group information and of SIP SUBSCRIBE/NOTIFY by group owners to authorize new members' subscriptions) are considered together.

M1: Device 10 subscribes to the Group Manager as a watcher for the group members' information, in order to be notified of any user applying for group membership. This is done by subscribing to the SIP event package (see ref. [2]) membership.info and specifying the group name in the SIP header Group-Name. Only members with full membership rights to a particular group are granted the subscription. Device 10, being the group owner or initiator, has full rights granted from the group manager.

```
 SUBSCRIBE sip:group-manager@example.com SIP/2.0
 Via: SIP/2.0/UDP dcvice1.example.com; branch=z9hG4bshds7
 To: <sip:group-manager@example.com>
 From: <sip: device1@example.com>;tag=12306894034
 Call-ID: 1234029567@pl.example.com
 CSeq: 100 SUBSCRIBE
 Max-Forwards: 70
 Contact: sip:devicel@.example.com
 Group-Name: D1Group@example.com
 Expires: 3600
 Event: membership.info
 Content-Length: 0
```

M2: A 200 (OK) response is sent by the group manager to the group owner subscribing to group membership information to confirm the reception of the subscription request.

```
 SIP/2.0 202 OK
 Via: SIP/2.0/UDP device1.example.com; branch=z9hG4bshds7
 To: <sip:group-manager@example-com>;tag=096706894034
 From: <sip:device1@example.com>;tag=12306894034
 Call-ID: 1234029567@pl.example.com
 CSeq: 100 SUBSCRIBE
 Contact: sip: group-manager.example.com
 Expires: 3600
 Content-Length: 0
```

M3: The Group Manager sends a SIP NOTIFY to device 10 in response to its subscription with the current published group information. No members are present at the moment.

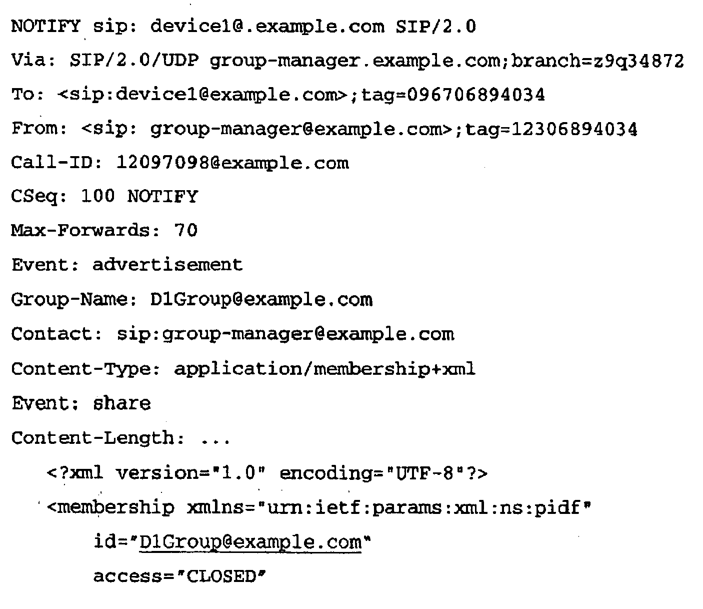

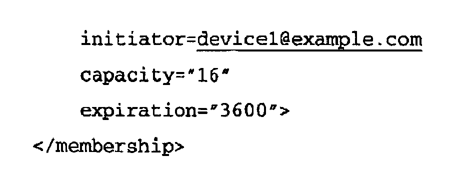

M4: device 10 confirms receipt of the NOTIFY request.

```
 SIP/2.0 200 OK
 Via: SIP/2.0/UDP group-manager.example.com;branch=z9q34872
 To: <sip:devicel@example.com>;tag=096706894034
 From: <sip: group-manager@example.com>;tag=12306894034
 Call-ID: 12097098@example.com
 CSeq: 100 NOTIFY
 Content-Length: 0
```

M5: Device 20 contacts the group manager to subscribe for group information. Device 20 is not currently authorized to receive D1Group information but he would like to join the group in order to access the contents shared in that group. Note that Device 20 does not subscribe to the membership.info event package but to the share event package in order to get the authorization from the group owner to access the contents shared in the group.

```
 SUBSCRIBE sip:group-manager@example.com SIP/2.0
 Via: SIP/2.0/UDP device2.example.com; branch=z9hG4bshds7
 To: <sip:group-manager@example.com>
 From: <sip: device2@example.com>;tag=12306894034
 Call-ID: 1234efb97@example.com
 CSeq: 100 SUBSCRIBE
 Max-Forwards: 70
 Contact: sip:device2@ example.com
 Group-Name: D1Group@example.com
 Expires: 3600
 Event: share
 Content-Length: 0
```

M6: group-manager confirms receipt of the SUBSCRIBE request.

```
 SIP/2.0 202 OK
 Via: SIP/2.0/UDP device2.example.com; branch=z9hG4bshds7
 To: <sip:group-manager@example.com>;tag=096706894034
 From: <sip: device2@example.com>;tag=12306894034
 Call-ID: 1234efb97@example.com
 CSeq: 100 SUBSCRIBE
 Contact: sip: group-manager.example.com
 Expires: 3600
 Content-Length: 0
```

M7: The Group Manager sends a SIP NOTIFY to device 20, whose authorization is still pending.

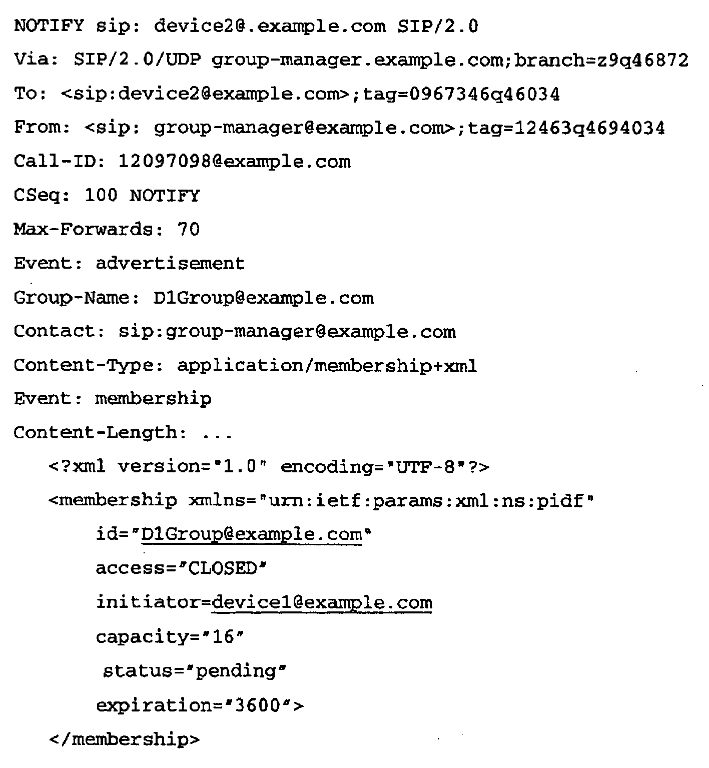

M8: device 20 confirms receipt of the NOTIFY request.

```
 SIP/2.0 200 OK
 Via: SIP/2.0/UDP group-manager.example.com;branch=z9q46872
 To: <sip:device2@example.com>;tag=0967346q46034
 From: <sip: group-manager@example.com>;tag=12463q4694034
 Call-ID: 12097098@example.com
 CSeq: 100 NOTIFY
 Content-Length: 0
```

M9: the group-manager sends a SIP NOTIFY to the group owner (Device 10) with the current group membership state ("pending") of Device 20.

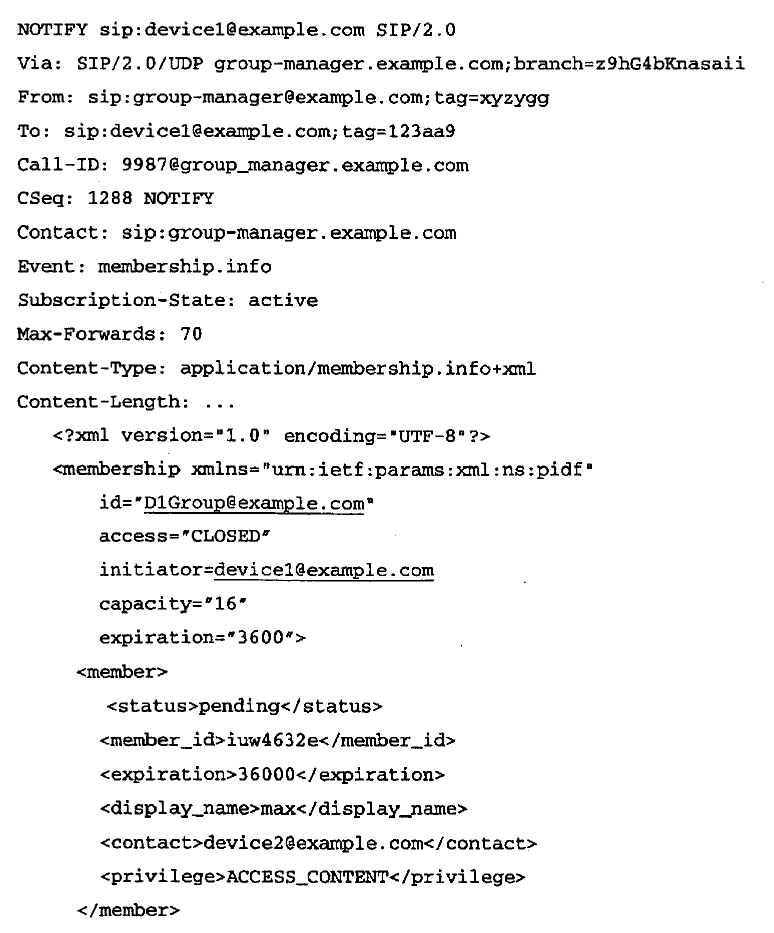

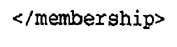

M10: Device 10 confirms receipt of the NOTIFY request.

```
 SIP/2.0 202 OK
 Via: SIP/2.0/UDP group-manager.example.com;branch=z9hG4bKnasaii
 From: sip:group-manager@example.com;tag=xyzygg
 To: sip:device1@example.com;tag=123aa9
 Call-ID: 9987@group_manager.example.com
 CSeq: 1288 NOTIFY
 Contact: sip: group-manager.example.com
 Expires: 3600
 Content-Length: 0
```

M11 : Device 10 contacts the group manager to update the group membership information and add device 20 as a new group member. This is done by changing device 20 status from "pending" to "active" and setting its group privileges (ACCESS_CONTENT).

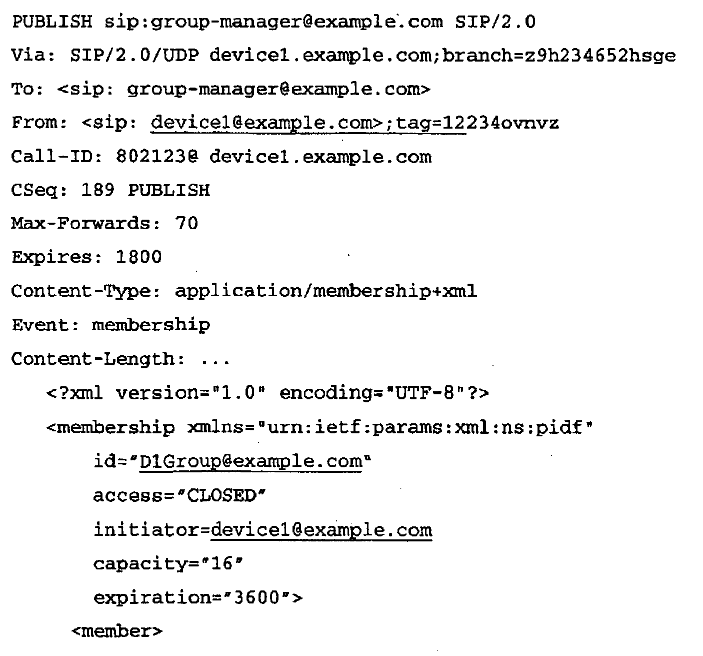

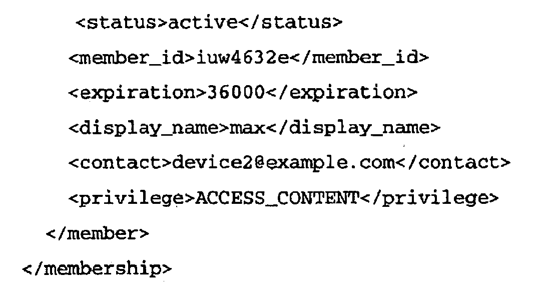

M12: The Group Manager confirms the publication of the group information by sending a 200 OK message to the group initiator (Device 10).

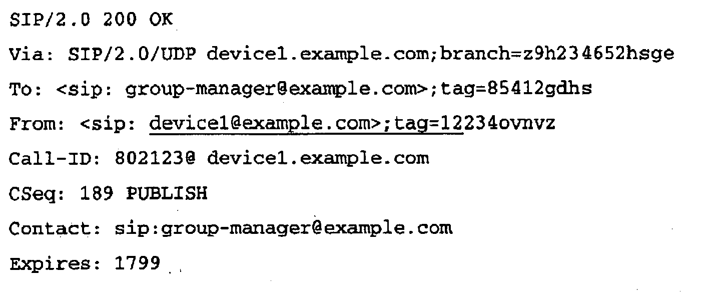

M13: The Group Manager sends a SIP NOTIFY to the group owner, since the group membership has changed.

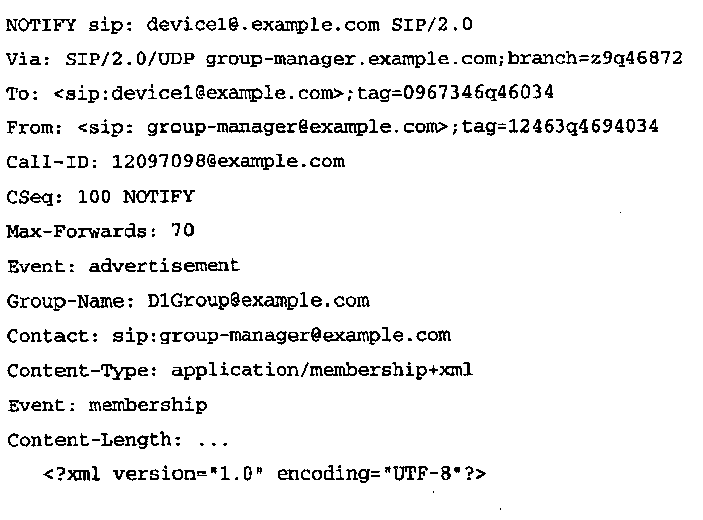

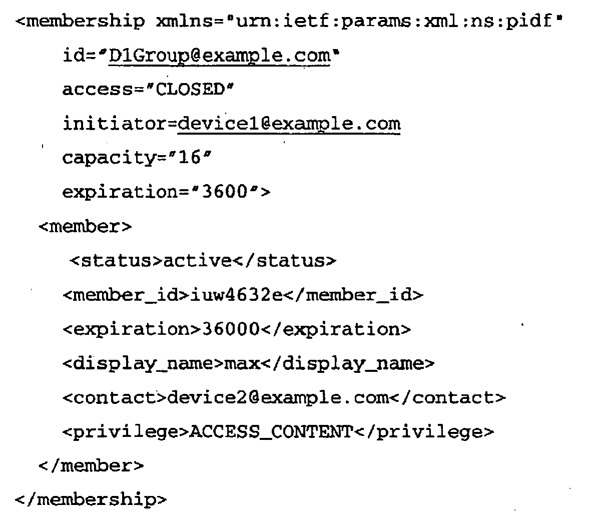

M14: Device 10 confirms receipt of the NOTIFY request.

```
 SIP/2.0 200 OK
 Via: SIP/2.0/UDP group-manager.example.com;branch=z9q46872
 To: <sip:device1@example.com>;tag=0967346q46034
 From: <sip: group-manager@example.com>;tag=12463q4694034
 Call-ID: 12097098@example.com
 CSeq: 100 NOTIFY
 Content-Length: 0
```

M15: The Group Manager sends a SIP NOTIFY to the device whose group membership has been granted (Device 20) to notify that he has been added to the group, the XML body of the SIP NOTIFY request containing a subset of the group information previously published by the group initiator/owner.

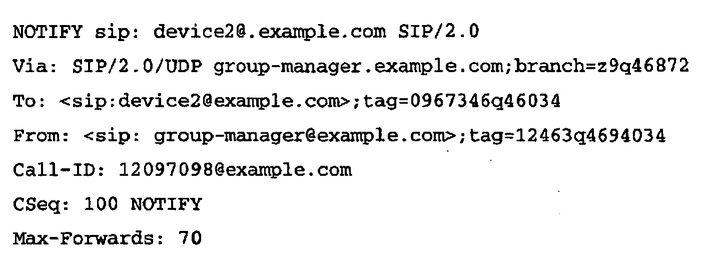

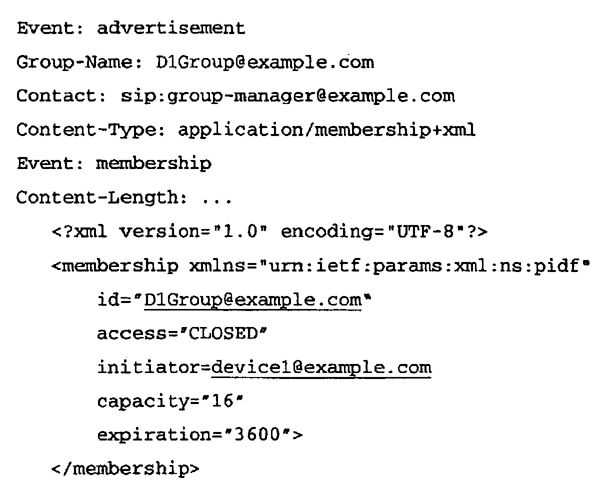

M16: Device 20 confirms receipt of the NOTIFY request.

```
 SIP/2.0 200 OK
 Via: SIP/2.0/UDP group-manager.example.com;branch=z9q46872
 To: <sip:device2@example.com>;tag=0967346q46034
 From: <sip: group-manager@example.com>;tag=12463q4694034
 Call-ID: 12097098@example.com
 CSeq: 100 NOTIFY
 Content-Length: 0
```

It should be understood that the first and second embodiments can be implemented and used separately or they can be combined.

### REFERENCES

All of the following documents are fully incorporated herein by reference.
[1] RFC 3261 "SIP: Session Initiation Protocol
[2] RFC 3265 "SIP-Specific Event Notification"
[3] RFC 3856 "A Presence Event Package for the Session Initiation Protocol"
[4] RFC 3903 "Session Initiation Protocol (SIP) Extensions for Event State Publication
[5] RFC 2617 "HTTP Authentication: Basic and Digest Access Authentication"
[6] RFC 3857"A Watcher Information Event template-Package for the Session Initiation Protocol"
[7] RAHMAN, Mahfuzur, BUFORD, John, "SERVICE DISCOVERY USING SESSION INITIATION PROTOCOL (SIP)", Applicant MATSUSHITA ELECTRIC INDUSTRIAL CO., LTD., Appl. Data US05043095 20051128, Pub. Number WO2006060375.
[8] http://www.research.earthlink.net/p2p/
[9] Bray, T., Hollander, D., and A. Layman "Namespaces in XML", W3C recommendation: xml-names, 14 January 1999, <http://www.w3.ors/TR/REC-xml-names>.
[10] RFC 3023: XML Media Types
[11] http://technorati.com/blogs/
[12] "An Extensible Markup Language (XML) Document Format for Indicating Changes in XML Configuration Access Protocol (XCAP) Resources", J. Rosenberg, March 6, 2006, URL: http://www.ietf.ors/intemet-drans/draft-ietf-simple-xcap-diff-03.txt
[13] "The Extensible Markup Language (XML) Configuration Access protocol (XCAP)", J. Rosenberg, May 5, 2006
[14] "Extensions to the Session Initiation Protocol (SIP) User Agent Profile Delivery Change Notification Event Package for the Extensible Markup Language Configuration Access Protocol (XCAP)", D. Petrie, March 20, 2006.
[15] http://www.ietf.org/internet-drafts/draft-garcia-sipping-resource-sharing-framework-00.txt

## Claims

1. A method of managing a group of telecommunication devices (40; 10, 20) including distributing group information between the telecommunication devices using a Session Initiation (SIP) event notification framework.

2. The method of claim 1, wherein the information is distributed using a SIP PUBLISH method.

3. The network of claim 2, wherein the SIP PUBLISH method creates or modifies the group information.

4. The method of claim 1,2 or 3, wherein the group information includes at least one of:
group members, group member privileges, group managers, group identifier, maximum number of members allowed in the group, group expiration time, and group visibility and accessibility, which may include a list of users prevented from accessing the group.

5. The method of claim 2,3 or 4, wherein the SIP PUBLISH method is in accordance with RFC 3903.

6. The method of claim 1,2,3,4 or 5, wherein the group of devices (40) form a peer-to-peer network.

7. The method of claim 1,2,3,4,5 or 6, wherein the group of devices (40) include one or more mobile or cellular telecommunications devices.

8. A method of sharing content or group information between a first device (10) and a second device (20), the method including establishing a group of devices (40) including the first device (10) and arranged such that the first device (10) is notified by a SIP NOTIFY when the second device (20) wishes to join the group, and in response to which the first device (10) selectively provides the second device (20) with data enabling the content or group information to be accessed by the second device (20).

9. The method of claim 8, wherein the first device (10) subscribes to the group as a watcher.

10. The method of claim 9 or 10, wherein a SIP SUBSCRIBE is generated by a device (20) when it wishes to join the group (40).

11. The method of claim 8,9 or 10, wherein the data is provided in the XML body of a SIP NOTIFY.

12. The method of claims 8,9,10 or 11, wherein a group management entity (30) is provided for receiving and/or transmitting the SIP NOTIFY and for receiving/transmitting said data.
